# EUROPEAN PATENT APPLICATION

(11) **EP 4 778 817 A1**
(43) Date of publication of application: **22.07.2026**
(21) Application number: 24863867.8
(22) Date of filing: 19.08.2024
(51) Int. Cl.: B62K 21/04

(54) **BRACKET**

(30) Priority: 14.09.2023 JP 2023148867
(71) Applicant: KYB Motorcycle Suspension Co., Ltd., Kani-shi, Gifu 509-0297 (JP)
(72) Inventor: AMIKI, Yuichi, Kani-shi, Gifu 509-0297 (JP); NOGUCHI, Nobuhiro, Kani-shi, Gifu 509-0297 (JP); MAKINO, Kimiaki, Kani-shi, Gifu 509-0297 (JP)
(74) Representative: MFG Patentanwälte Meyer-Wildhagen Meggle-Freund Gerhard PartG mbB
(86) International application number: PCT/JP2024/029313
(87) International publication number: WO 2025/057663

(57) **Abstract**

A bracket (1) is a bracket (1) for coupling a pair of fork members (F, F) supporting a front wheel (W) of a straddle vehicle (V) to a steering shaft (S) of the straddle vehicle (V), and includes a shaft holding ring (2) that holds the steering shaft (S), a pair of left and right clamps (3, 4) that hold upper ends of the respective fork members (F, F), a pair of arms (5, 6) that connect the shaft holding ring (2) and the clamps (3, 4), and a reinforcing portion (7) that couples the clamps (3, 4) to each other.

## Description

### Technical Field

The present invention relates to a bracket used for a straddle vehicle.

### Background Art

Conventionally, a bracket grips upper ends of a pair of fork members supporting a front wheel serving as a steering wheel of a straddle vehicle, and is fitted to an outer periphery of a lower end of a steering shaft rotatably held in a head pipe provided at a distal end of a vehicle body of the straddle vehicle to couple the fork member and the steering shaft.

For example, as disclosed in JP 2003-154984 A, a bracket includes a shaft holding ring that is fitted to an outer periphery of a steering shaft coupled to a handle, a pair of clamps that grip upper ends of fork members, and a pair of arms that couples the clamps arranged on the left and right sides with the shaft holding ring at the center to the shaft holding ring at the center.

Therefore, when a rider rotates a handle while a straddle vehicle is traveling, the fork member rotates about the steering shaft to rotate a front wheel in the left and right direction, so that the straddle vehicle can travel in the direction intended by the rider.

### Citation List

### Patent Literature

Patent Literature 1: JP 2003-154984 A

### Summary of Invention

### Technical Problem

As described above, the bracket has a role of transmitting the operation to the front wheel when the rider operates the handle, and the front wheel receives resistance from the road surface during steering. Therefore, when the handle is operated, a moment in the torsional direction acts around the shaft holding ring. When the rigidity of the bracket in the torsional direction is low, the steering response of the front wheel is delayed with respect to the handle steering of the steering person. Therefore, the bracket is required to have high rigidity in the torsional direction from the viewpoint of steering responsiveness.

In addition, the fork member gripped by the bracket is attached in a posture in which the upper end is inclined rearward from the lower end, and when the front wheel receives vibration in the vertical direction during traveling of the straddle vehicle, a bending moment is applied to the bracket in the front and rear direction. Therefore, when the rigidity of the bracket in the bending direction is increased, the vibration of the front wheel in the vertical direction is easily transmitted to the vehicle body, and the riding comfort is deteriorated. Therefore, the bracket is required to have low rigidity in the bending direction from the viewpoint of riding comfort.

Therefore, when the rigidity of the arm is simply increased in order to improve the steering responsiveness, not only the rigidity in the torsional direction of the bracket is increased but also the rigidity in the bending direction of the bracket is increased, so that the riding comfort is impaired. On the other hand, when the rigidity of the arm is simply lowered in order to improve the riding comfort, not only the rigidity in the bending direction but also the rigidity in the torsional direction of the bracket is lowered, so that the steering responsiveness is impaired. It is difficult to improve the steering responsiveness and the riding comfort of the straddle vehicle only by setting the rigidity of the arm.

Therefore, an object of the present invention is to provide a bracket that does not impair riding comfort while improving steering responsiveness in a straddle vehicle.

### Solution to Problem

In order to solve the above problem, a bracket of the present invention is a bracket for coupling a pair of fork members supporting a front wheel of a straddle vehicle to a steering shaft of the straddle vehicle, and includes a shaft holding ring that holds the steering shaft, a pair of left and right clamps that hold upper ends of the fork members, a pair of arms that connect the shaft holding ring and the clamps, and a reinforcing portion that couples the clamps to each other.

In the bracket with the above-described configuration, by providing the reinforcing portion that couples the clamps to each other, the reinforcing portion does not greatly improve the rigidity in the bending direction of the bracket, and on the other hand, the rigidity can be improved with respect to the moment in the torsional direction that rotates the left and right clamps in the horizontal direction with respect to the shaft holding ring together with the arm.

### Brief Description of Drawings

Fig. 1 is a view illustrating a straddle vehicle to which a bracket according to an embodiment of the present invention is applied.
Fig. 2 is a front view of the bracket according to the embodiment of the present invention.
Fig. 3 is a plan view of the bracket according to the embodiment of the present invention.
Fig. 4 is a rear view of the bracket according to the embodiment of the present invention.
Fig. 5 is a bottom view of the bracket according to the embodiment of the present invention.
Fig. 6 is a perspective view of the bracket according to the embodiment of the present invention.
Fig. 7 is a plane of the bracket according to a modification of the embodiment of the present invention.

### Description of Embodiments

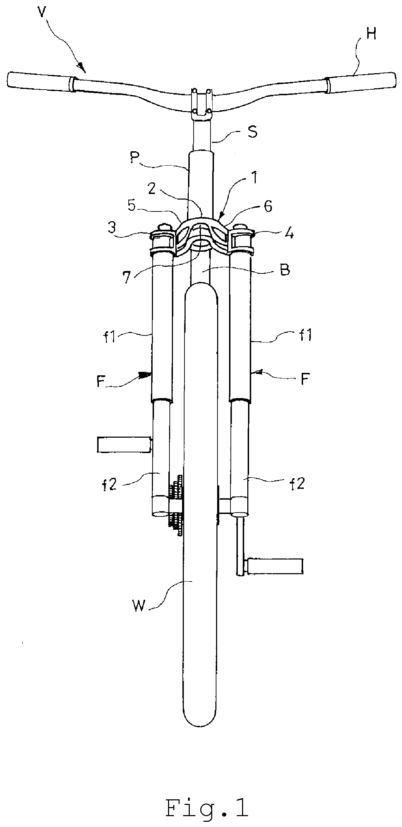

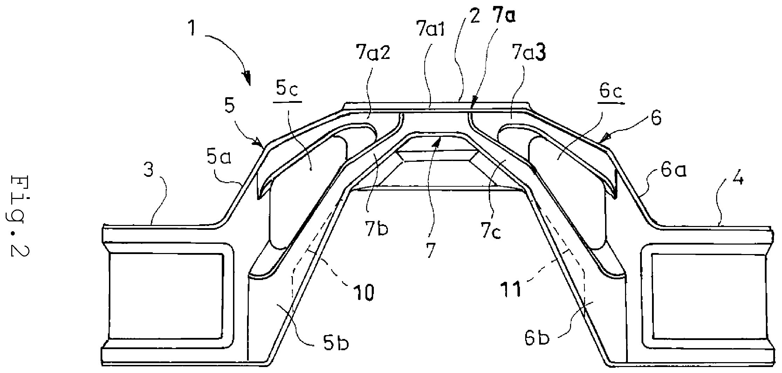

Hereinafter, the present invention will be described based on embodiments illustrated in the drawings. As illustrated in Figs. 1 and 2, a bracket 1 according to an embodiment is a bracket 1 for coupling a pair of fork members F and F, supporting a front wheel W of a straddle vehicle V, to a steering shaft S of the straddle vehicle V, and the bracket includes a shaft holding ring 2 that holds the steering shaft S, a pair of left and right clamps 3 and 4 that grips upper ends of the fork members F and F, a pair of arms 5 and 6 that respectively connect the shaft holding ring 2 and the clamps 3 and 4, and a reinforcing portion 7 that couples the clamps 3 and 4. In the present specification, the front, rear, left, right, up, and down directions will be described with reference to the straddle vehicle V unless otherwise specified.

As illustrated in Fig. 1, the bracket 1 couples the steering shaft S that is inserted into a head pipe P provided at a distal end of a vehicle body B in the straddle vehicle V and is rotatably held by the head pipe P and the upper ends of the pair of fork members F and F that are disposed on left and right sides of the front wheel W of the straddle vehicle V and hold an axle of the front wheel W on a lower end side.

In the present embodiment, the fork members F and F include an outer tube f1 disposed on the vehicle body side and an inner tube f2 disposed on the axle side that enters and exits the outer tube f1 from the lower end of the outer tube f1, and are front forks that generate a damping force when the inner tube f2 relatively moves in the axial direction with respect to the outer tube f1. The fork members F and F may be rod-shaped members that do not expand and contract as long as the fork members F and F rotatably support the front wheel W.

The steering shaft S is inserted into the head pipe P of the vehicle body of the straddle vehicle, is fitted in a ball bearing attached to the inner periphery of the head pipe P, and is rotatable around the axis with respect to the head pipe P. The steering shaft S has an upper end protruding upward from the inside of the head pipe P and a lower end protruding downward from the inside of the head pipe P. An upper end of the steering shaft S is coupled to a handle H, and when the handle H is operated, the steering shaft S rotates around the axis in the head pipe P.

As illustrated in Figs. 2 to 4, the bracket 1 includes the shaft holding ring 2 that holds the steering shaft S, the pair of left and right clamps 3 and 4 that grip the upper ends of the fork members F and F, the pair of arms 5 and 6 that connect the shaft holding ring 2 and the clamps 3 and 4, respectively, and the reinforcing portion 7 that couples the clamps 3 and 4 to each other.

The shaft holding ring 2 is annular and has an inner diameter slightly smaller than the outer diameter of the outer periphery of the lower end of the steering shaft S, and is press-fitted to the outer periphery of the lower end of the steering shaft S to grip the lower end of the steering shaft S.

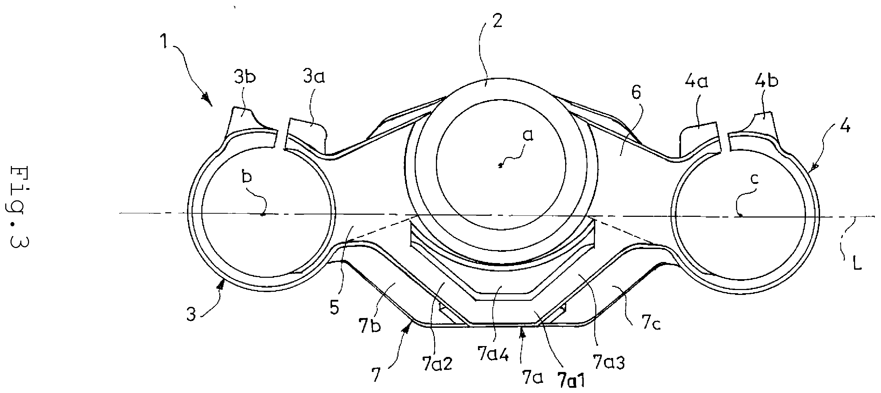

As illustrated in Fig. 3, both the clamps 3 and 4 are C-shaped split circular annular portions in a plan view viewed from above, and are arranged on both left and right sides of the shaft holding ring 2 with the shaft holding ring 2 at the center.

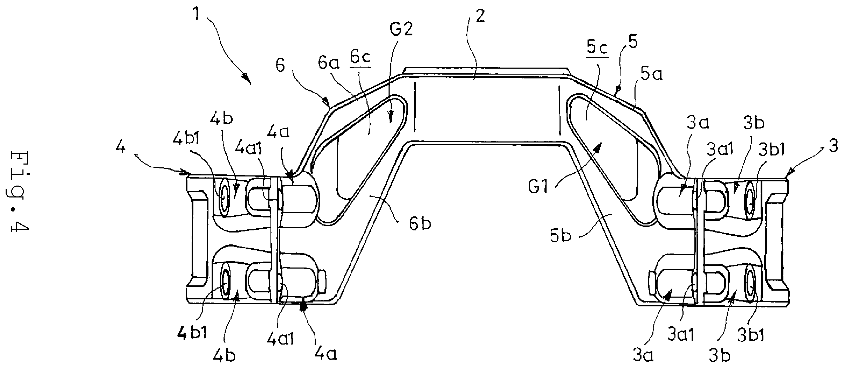

As illustrated in Figs. 3 and 4, the left clamp 3 arranged on the left side in Fig. 3 of the shaft holding ring 2 includes ear portions 3a and 3b protruding radially outward from the upper and lower ends of the split in the circumferential direction. The ear portions 3a and 3b form a pair between the upper ear portions 3a and 3b facing each other across the split in the circumferential direction, and form a pair between the lower ear portions 3a and 3b facing each other across the split in the circumferential direction.

The ear portion 3a provided at the end on the center side (right side in Fig. 3) on the shaft holding ring 2 side is provided with a screw hole 3a1 that enables screw coupling of the bolt, and the ear portion 3b provided at the end on the outer side (left side in Fig. 3) on the opposite shaft holding ring 2 side is provided with an insertion hole 3b1 that enables insertion of the bolt.

Therefore, the bolt (not illustrated) is passed through the insertion holes 3b1 of the upper and lower ear portions 3b of the clamp 3, and the bolt is screwed into the screw hole 3a1 of the mating ear portion 3a which forms a pair with the ear portion 3b. As the bolt is tightened, the paired ear portions 3a and 3b are drawn closer together by the bolt, thereby reducing the inner diameter of the clamp 3. Therefore, by inserting the upper end of the fork member F into the clamp 3 and then reducing the diameter of the clamp 3 by using the bolt as described above, the clamp 3 tightens the outer periphery of the upper end of the fork member F and grips the fork member F.

In addition, as illustrated in Fig. 4, the right clamp 4 arranged on the right side in Fig. 3 of the shaft holding ring 2 includes ear portions 4a and 4b protruding radially outward from the upper and lower sides of both ends of the split in the circumferential direction and forming a pair on the left and right, respectively, similarly to the left clamp 3. The ear portion 4a provided at the end on the center side (left side in Fig. 3) on the shaft holding ring 2 side is provided with a screw hole 4a1 that enables screw coupling of the bolt, and the ear portion 4b provided at the end on the outer side (right side in Fig. 3) on the opposite shaft holding ring 2 side is provided with an insertion hole 4b1 that enables insertion of the bolt. Therefore, similarly to the clamp 3, by inserting the upper end of the fork member F into the clamp 4 and then reducing the diameter of the clamp 4 by using the bolt (not illustrated), the clamp 4 tightens the outer periphery of the upper end of the fork member F and grips the fork member F.

As illustrated in Fig. 2, the arms 5 and 6 include upper arm portions 5a and 6a and lower arm portions 5b and 6b, and gaps 5c and 6c are provided between the upper arm portions 5a and 6a and the lower arm portions 5b and 6b, and connect the shaft holding ring 2 and the clamps 3 and 4 with the shaft holding ring 2 at the center. That is, the arm 5 couples the shaft holding ring 2 and the left clamp 3, and the arm 6 couples the shaft holding ring 2 and the right clamp 4. As illustrated in Fig. 2, in the front view, the shaft holding ring 2 is located at the center of the left and right clamps 3 and 4. However, as illustrated in Fig. 3, in a plan view, the center a of the shaft holding ring 2 is eccentric to the upper side in Fig. 3 with respect to the line L connecting the centers b and c of the clamps 3 and 4.

As illustrated in Fig. 2, the shaft holding ring 2 is disposed above the left and right clamps 3 and 4 in the drawing. As described above, since the center a of the shaft holding ring 2 is eccentric to the upper side in Fig. 3 with respect to the line L, and the shaft holding ring 2 is disposed above the left and right clamps 3 and 4 in Fig. 2, the arm 5 is connected to the shaft holding ring 2 in an inclined posture extending from the left clamp 3 toward the rear side and the upper side of the straddle vehicle V, and the arm 6 is also connected to the shaft holding ring 2 in an inclined posture extending from the right clamp 4 toward the rear side and the upper side in Fig. 3.

More specifically, the upper arm portion 5a of the arm 5 connects the upper end of the shaft holding ring 2 and the upper end of the left clamp 3, the lower arm portion 5b of the arm 5 connects the lower end of the shaft holding ring 2 and the lower end of the left clamp 3, the upper arm portion 6a of the arm 6 connects the upper end of the shaft holding ring 2 and the upper end of the right clamp 4, and the lower arm portion 6b of the arm 6 connects the lower end of the shaft holding ring 2 and the lower end of the right clamp 4. The upper arm portions 5a and 6a and the lower arm portions 5b and 6b are inclined to connect the upper end and the lower end of the shaft holding ring 2 to the upper end and the lower end of each of the clamps 3 and 4.

As described above, since the arms 5 and 6 are inclined so as to dispose the shaft holding ring 2 above the clamps 3 and 4, the front wheel W does not come into contact with the shaft holding ring 2 even if the front wheel W approaches the bracket 1 due to the contraction of the fork members F and F. When the front wheel W and the shaft holding ring 2 do not interfere with each other even if the arms 5 and 6 are not inclined to connect the shaft holding ring 2 above the clamps 3 and 4 as described above, the arms 5 and 6 may connect the shaft holding ring 2 and the clamps 3 and 4 at the same height without being inclined.

The bracket 1 further includes the reinforcing portion 7 that couples the clamps 3 and 4 to each other. In the bracket 1 of the present embodiment, the reinforcing portion 7 is provided integrally with the arms 5 and 6 and the shaft holding ring 2, the arms 5 and 6 extend from the shaft holding ring 2 toward the clamps 3 and 4, and the boundary between the arms 5 and 6 and the reinforcing portion 7 is indicated by a broken line in Fig. 3. The conventional bracket does not include the reinforcing portion, only the left and right clamps and the shaft holding ring are connected by the arm, and a portion below the broken line in Fig. 3 is cut off. On the other hand, the bracket 1 of the present embodiment has a structure in which the bracket 1 of the present embodiment includes the reinforcing portion 7 as described above.

As illustrated in Figs. 2 and 3, the reinforcing portion 7 includes a holding ring connection portion 7a which is a portion extending horizontally from the side of the upper end side of the shaft holding ring 2 and integrated with the shaft holding ring 2, and arm connection portions 7b and 7c which extend from the left and right sides of the holding ring connection portion 7a in Fig. 3 and are connected to the left and right clamps 3 and 4 integrally with the arms 5 and 6.

As illustrated in Fig. 2, the holding ring connection portion 7a has a center extending in the horizontal direction as the front side of the sheet from the front of the outer periphery of the upper end of the shaft holding ring 2 in Fig. 2 and connected to the front side of the outer periphery of the upper end of the shaft holding ring 2 and the upper arm portions 5a and 6a of the arms 5 and 6. As illustrated in Fig. 3, the holding ring connection portion 7a includes a central portion 7a1 protruding downward from the lower end of the shaft holding ring 2 in a substantially rectangular shape, and side portions 7a2 and 7a3 inclined continuously to the left and right of the central portion 7a1 and connected to the shaft holding ring 2 and the arms 5 and 6, and is formed in a substantially trapezoidal shape. In addition, the holding ring connection portion 7a is connected to the shaft holding ring 2 so as to surround the entire portion between the arms 5 and 6 on the outer periphery of the upper end of the shaft holding ring 2, and a groove 7a4 along the outer periphery of the shaft holding ring 2 is provided in a portion of the central portion 7a1 and the side portions 7a2 and 7a3 facing each other between the arms 5 and 6.

The arm connection portions 7b and 7c extend obliquely in directions away from each other from the lower end of the central portion 7a1 of the holding ring connection portion 7a and are connected to the lower arm portions 5b and 6b of the arms 5 and 6, respectively.

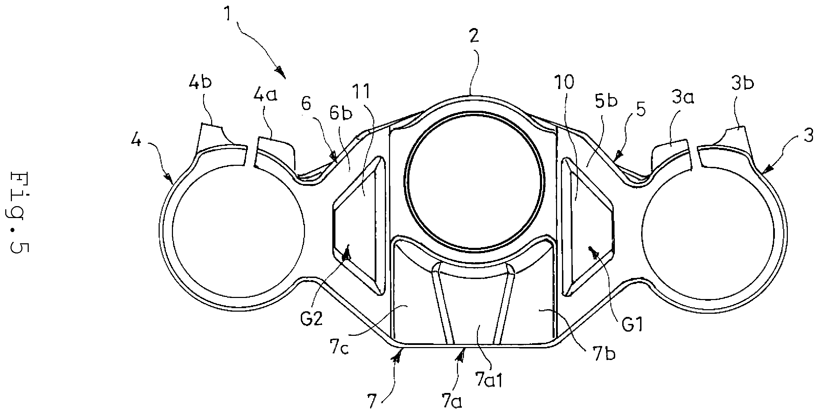

As described above, the arm connection portion 7b of the reinforcing portion 7 and the lower arm portion 5b to which the arm connection portion 7b is connected integrally form a connection portion having a substantially trapezoidal shape in a plan view connecting the shaft holding ring 2 and the clamp 3 on the left side, and the connection portion is provided with a recess 10 opened downward as illustrated in Figs. 2 and 5. The recess 10 forms, together with the gap 5c between the upper arm portion 5a and the lower arm portion 5b, a thinned portion G1 for securing rigidity in the bending direction of the arm 5, enhancing rigidity in the torsional direction, and reducing the weight of the bracket 1. In addition, the arm connection portion 7c of the reinforcing portion 7 and the lower arm portion 6b to which the arm connection portion 7c is connected integrally form a connection portion having a substantially trapezoidal shape in a plan view connecting the shaft holding ring 2 and the clamp 4 on the right side, and the connection portion is provided with a recess 11 opened downward as illustrated in Figs. 2 and 5. The recess 11 forms, together with the gap 6c between the upper arm portion 6a and the lower arm portion 6b, a thinned portion G2 for securing rigidity in the bending direction of the arm 6, enhancing rigidity in the torsional direction, and reducing the weight of the bracket 1.

The bracket 1 of the present embodiment has the above-described configuration, and the operation will be described below. As described above, the steering shaft S is press-fitted into the shaft holding ring 2 and the bracket 1 is coupled to the steering shaft S. The left and right clamps 3 and 4 are coupled to the fork members F and F by tightening the upper ends of the fork members F and F inserted into the clamps 3 and 4 by using bolts (not illustrated).

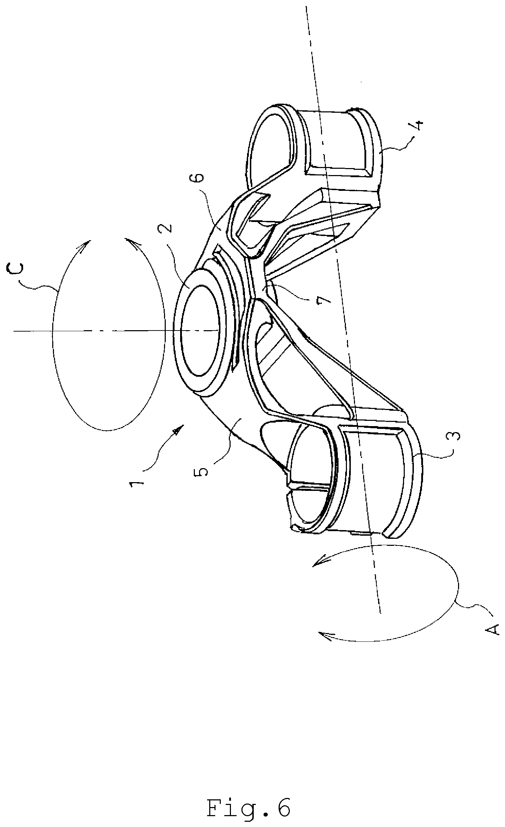

When the straddle vehicle V travels and the front wheel W climbs over the unevenness of the road surface or the ground load of the front wheel W to the road surface fluctuates, as illustrated in Fig. 6, a bending moment that simultaneously rotates the left and right clamps 3 and 4 with respect to the shaft holding ring 2 along the vertical direction via the fork members F and F acts on the bracket 1. When the rider operates the handle H to rotate the front wheel W, a moment in a torsional direction that simultaneously rotates the left and right clamps 3 and 4 with respect to the shaft holding ring 2 in the horizontal direction about the axis of the shaft holding ring 2 via the fork members F and F acts on the bracket 1 by friction or the like between the road surface and the front wheel W. Furthermore, the action of the bending moment on the bracket 1 refers to a moment acting on the bracket 1 due to a force in a direction in which the fork members F and F are bent along the vertical direction with respect to the axis of the steering shaft S. The action of the moment in the torsional direction on the bracket 1 refers to a moment acting on the bracket 1 due to a force in a direction in which the steering shaft S is rotated around the axis from the fork members F and F side.

When a bending moment acts on the bracket 1, as indicated by an arrow A in Fig. 6, a force for rotating the left and right clamps 3 and 4 along the vertical direction with respect to the shaft holding ring 2 acts as a torque for twisting the arms 5 and 6 and the reinforcing portion 7 with respect to the left and right arms 5 and 6 and the reinforcing portion 7. The thickness of the reinforcing portion 7 in the height direction is smaller than the height of the arms 5 and 6 in the vertical direction, and the reinforcing portion 7 is connected to the left and right clamps 3 and 4 and is integrated with the lower arm portions 5b and 6b of the arms 5 and 6 and the shaft holding ring 2. However, the reinforcing portion 7 does not greatly improve the rigidity of the arms 5 and 6 in the bending direction, so that even if the reinforcing portion 7 is provided in the bracket 1, the rigidity of the bracket 1 against the bending moment does not become too high.

Therefore, when the bending moment acts on the bracket 1, the bracket 1 can be flexibly and elastically deformed, the front wheel W supported by the distal ends of the fork members F and F can be displaced in the vertical direction with respect to the vehicle body B, and input of vibration from the road surface to the vehicle body B can be alleviated, and the riding comfort in the straddle vehicle V is not impaired.

On the other hand, when a moment in the torsional direction acts on the bracket 1, as indicated by an arrow C in Fig. 6, a force for rotating the left and right clamps 3 and 4 in the horizontal direction with respect to the shaft holding ring 2 acts as a force for bending the arms 5 and 6 and the reinforcing portion 7 with respect to the left and right arms 5 and 6 and the reinforcing portion 7. Since the reinforcing portion 7 is connected to the left and right clamps 3 and 4, the left and right clamps 3 and 4 are prevented from rotating in the horizontal direction with respect to the shaft holding ring 2 together with the arms 5 and 6, or from approaching or separating from each other. Since the reinforcing portion 7 prevents the left and right clamps 3 and 4 from rotating in the horizontal direction with respect to the shaft holding ring 2 together with the arms 5 and 6, providing the reinforcing portion 7 in the bracket 1 increases the rigidity of the bracket 1 against the moment in the torsional direction.

Therefore, when the moment in the torsional direction acts on the bracket 1, the deformation of the bracket 1 is suppressed, the relative displacement between the steering shaft S and the fork members F and F is reduced accordingly, the steering response of the front wheel W with respect to the steering of the handle H of the steering person of the straddle vehicle V is less likely to be delayed, and the steering responsiveness is improved.

As described above, the bracket 1 of the present embodiment is the bracket 1 for coupling the pair of fork members F and F supporting the front wheel W of the straddle vehicle V to the steering shaft S of the straddle vehicle V, and includes the shaft holding ring 2 that holds the steering shaft S, the pair of left and right clamps 3 and 4 that hold the upper ends of the fork members F and F, the pair of arms 5 and 6 that connect the shaft holding ring 2 and the clamps 3 and 4, and the reinforcing portion 7 that couples the clamps 3 and 4.

In the bracket 1 with the above-described configuration, by providing the reinforcing portion 7 that couples the clamps 3 and 4 to each other, the reinforcing portion 7 does not greatly improve the rigidity in the bending direction of the arms 5 and 6, but the rigidity can be improved with respect to the moment in the torsional direction that rotates the left and right clamps 3 and 4 in the horizontal direction with respect to the shaft holding ring 2 together with the arms 5 and 6. Therefore, according to the bracket 1 of the present embodiment, since the rigidity in the torsional direction can be increased without greatly increasing the rigidity in the bending direction of the bracket 1 by providing the reinforcing portion 7, the riding comfort is not impaired while the steering responsiveness in the straddle vehicle V is improved.

In the bracket 1 of the present embodiment, the reinforcing portion 7 is integrated with each of the shaft holding ring 2 and the arms 5 and 6 to couple the clamps 3 and 4 to each other. According to the bracket 1 with the above-described configuration, since the reinforcing portion 7 is integrated with the shaft holding ring 2 and the arms 5 and 6, it is easy to adopt a manufacturing method using a mold such as sintering, mold casting, or die casting in manufacturing the bracket 1.

In the bracket 1 of the present embodiment, the thickness of the reinforcing portion 7 in the vertical direction is thinner than the height of the arms 5 and 6 in the vertical direction, and even when the reinforcing portion 7 is integrated with the shaft holding ring 2 and the arms 5 and 6, the degree of increasing the rigidity of the arms 5 and 6 in the bending direction is small. Therefore, by integrating the reinforcing portion 7 with the shaft holding ring 2 and the arms 5 and 6, the degree of deteriorating the riding comfort of the straddle vehicle V can be reduced.

In addition, the holding ring connection portion 7a in which the upper ends of the arm connection portions 7b and 7c connected to the left and right clamps 3 and 4 of the reinforcing portion 7 are connected is connected to the outer periphery of the upper end of the shaft holding ring 2 and the upper arm portions 5a and 6a which are the upper ends of the arms 5 and 6. Therefore, in the bracket 1 of the present embodiment, when a bending moment is applied to the bracket 1 and a force for rotating the left and right clamps 3 and 4 along the vertical direction is applied to the shaft holding ring 2, the lengths of the arm connection portions 7b and 7c can be increased, a large bending moment is applied to a joint portion between the shaft holding ring 2 and the holding ring connection portion 7a so that the joint portion is easily deformed, and the left and right clamps 3 and 4 are easily rotated along the vertical direction with respect to the shaft holding ring 2. Therefore, according to the bracket 1 of the present embodiment, by integrating the reinforcing portion 7 with the shaft holding ring 2 and the upper end sides of the arms 5 and 6, the degree of increasing the rigidity in the bending direction of the arms 5 and 6 becomes slight, and by integrating the reinforcing portion 7 with the shaft holding ring 2 and the arms 5 and 6, the degree of deteriorating the riding comfort of the straddle vehicle V can be reduced.

In the bracket 1 of the present embodiment, each of the arms 5 and 6 includes the thinned portions G1 and G2 that improve the cross-sectional secondary moment as compared with the case where each of the arms 5 and 6 is solid. In the bracket 1 with the above-described configuration, an increase in weight due to the provision of the reinforcing portion 7 can be compensated for by providing the arms 5 and 6 with the thinned portions G1 and G2, thereby reducing the weight of the arms 5 and 6 and reducing the increase rate in the overall weight of the bracket 1. In addition, as compared with the case where the arms 5 and 6 are solid, even if the arms 5 and 6 are provided with the thinned portions G1 and G2, the cross-sectional secondary moment is improved, so that rigidity against sufficient bending and twisting required for the arms 5 and 6 can be secured. Therefore, rigidity of the bracket 1 can be secured while suppressing an increase in weight due to the provision of the reinforcing portion 7.

Since the thinned portions G1 and G2 only need to be provided so as to improve the cross-sectional secondary moment of the arms 5 and 6, the installation position and shape can be arbitrarily changed. In a case where the reinforcing portion 7 is integrated with the arms 5 and 6, the thinned portions G1 and G2 may be provided only on the arms 5 and 6, or may be provided from the arms 5 and 6 to the reinforcing portion 7 as in the bracket 1 of the present embodiment. In the bracket 1 of the present embodiment, the arms 5 and 6 are separated into the upper arm portions 5a and 6a and the lower arm portions 5b and 6b by installing the gap 5c penetrating the arms 5 and 6. However, in a case where the gap 5c is not provided, the arms 5 and 6 may not be separated into upper and lower portions, and a recess that does not penetrate the arms 5 and 6 may be provided instead of the gap 5c to form a thinned portion.

Furthermore, in the bracket 1 of the present embodiment, the holding ring connection portion 7a integrated with the shaft holding ring 2 in the reinforcing portion 7 includes the groove 7a4 along the outer periphery of the shaft holding ring 2 at the upper end. According to the bracket 1 with the above-described configuration, since the thickness of the place where the groove 7a4 of the holding ring connection portion 7a connected to the shaft holding ring 2 is installed is thin and the place is easily elastically deformed, when a bending moment acts on the bracket 1 and a force for rotating the left and right clamps 3 and 4 along the vertical direction acts on the shaft holding ring 2, the place can be actively deformed. Therefore, according to the bracket 1 of the present embodiment, since the difficulty in rotating the left and right clamps 3 and 4 in the vertical direction with respect to the shaft holding ring 2 due to the reinforcing portion 7 being integrated with the shaft holding ring 2 is alleviated, the degree of increasing the rigidity of the arms 5 and 6 in the bending direction becomes slight by integrating the reinforcing portion 7 with the shaft holding ring 2, and the degree of deteriorating the riding comfort of the straddle vehicle V can be reduced. Although the groove 7a4 is provided at the upper end of the holding ring connection portion 7a, the groove 7a4 may be formed at the lower end of the holding ring connection portion 7a if possible.

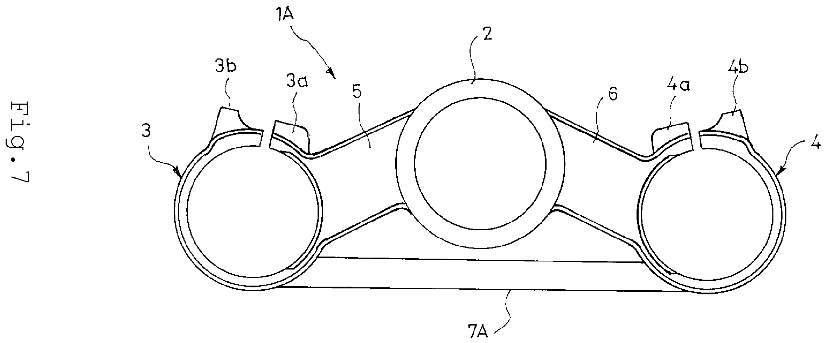

Like a bracket 1A illustrated in Fig. 7, a reinforcing portion 7A may be installed on the bracket 1 so as not to be integrated with each of the shaft holding ring 2 and the arms 5 and 6 but to be independently bridged between the left and right clamps 3 and 4. According to the bracket 1A with the above-described configuration, since the reinforcing portion 7A is not integrated with the shaft holding ring 2 and the arms 5 and 6 but is independently connected to the left and right clamps 3 and 4, even if a bending moment acts on the bracket 1, the reinforcing portion 7A does not prevent the left and right clamps 3 and 4 from rotating along the vertical direction with respect to the shaft holding ring 2, and thus hardly affects the rigidity in the bending direction of the left and right arms 5 and 6. On the other hand, when a moment in the torsional direction acts on the bracket 1, the reinforcing portion 7A prevents the left and right clamps 3 and 4 together with the arms 5 and 6 from rotating in the horizontal direction with respect to the shaft holding ring 2 and approaching or separating from each other. Therefore, according to the bracket 1 with the above-described configuration, since the rigidity in the torsional direction can be increased without affecting the rigidity in the bending direction of the bracket 1 at all by providing the reinforcing portion 7A, it is possible to achieve both improvement in steering responsiveness and improvement in riding comfort in the straddle vehicle V.

Although the preferred embodiment of the present invention has been described in detail above, modifications, variations and changes can be made without departing from the scope of the appended claims.

### Reference Signs List

- 1, 1A: BRACKET
- 2: SHAFT HOLDING RING
- 3, 4: CLAMP
- 5, 6: ARM
- 7, 7A: REINFORCING PORTION
- 7a: HOLDING RING CONNECTION PORTION
- 7a4: GROOVE
- F: FORK MEMBER
- G1, G2: THINNED PORTION
- S: STEERING SHAFT
- V: STRADDLE VEHICLE
- W: FRONT WHEEL

## Claims

1. A bracket for coupling a pair of fork members supporting a front wheel of a straddle vehicle to a steering shaft of the straddle vehicle, the bracket comprising:
a shaft holding ring that holds the steering shaft;
a pair of left and right clamps that grip upper ends of the fork member, respectively;
a pair of arms that connect the shaft holding ring and each of the clamps; and
a reinforcing portion that couples the clamps to each other.

2. The bracket according to claim 1,
wherein the reinforcing portion is integrated with each of the shaft holding ring and the arm to couple the clamps to each other.

3. The bracket according to claim 1,
wherein the reinforcing portion couples the clamps to each other independently of the shaft holding ring and the arm.

4. The bracket according to any one of claims 1 to 3,
wherein each of the arms includes a thinned portion that improves a cross-sectional secondary moment as compared with a case where the arm is solid.

5. The bracket according to claim 2,
wherein a holding ring connection portion integrated with the shaft holding ring in the reinforcing portion has a groove along an outer periphery of the shaft holding ring at an upper end or a lower end.
